# EUROPEAN PATENT SPECIFICATION

(11) **EP 0 477 771 B1**
(45) Date of publication and mention of the grant of the patent: **31.05.1995**
(21) Application number: 91115912.7
(22) Date of filing: 19.09.1991
(51) Int. Cl.: B60C 9/20, B60C 9/18

(54) **Three-belt tyre**
Reifen mit Gürtel aus drei Lagen
Bandage pneumatique ayant trois nappes de ceinture

(30) Priority: 25.09.1990 US 587416
(43) Date of publication of application: 01.04.1992
(73) Proprietor: MICHELIN RECHERCHE ET TECHNIQUE S.A., CH-1700 Fribourg (CH)
(72) Inventor: Pollard, Andrew L., Greenville, S.C. 29607 (US); de Reynal, Michel A., Greenville, S.C. 29615 (US)
(74) Representative: Doussaint, Jean-Marie

(56) References cited:
- FR-A- 2 358 998
- FR-A- 2 409 871
- US-A- 2 884 040
- US-A- 3 504 724
- US-A- 3 945 422
- US-A- 4 454 903

## Description

### TECHNICAL FIELD

The present invention relates to a pneumatic radial tyre, and in particular to improvements in the crown belt reinforcement package as it relates to better tyre performance for passenger cars.

### BACKGROUND OF THE INVENTION

The radial passenger car tyre produced for light to medium duty, at the time of this invention, classically has a belt reinforcing package comprising two belt plies of metallic cable with cable angles approximately 18 to 30 degrees from the equatorial plane of the tyre. Cord angles are opposed in one belt ply with respect to the other belt ply in a crossing pattern. This conventional tyre has a ply steer torque as a result of these cord angle that preloads the steering and suspension system of a vehicle. High shear stresses at the lateral edges of the belt package produce belt separations which shorten the life of the tyre. An intra-ply wedge of rubber between plies at their lateral edges is commonly used to reduce the shear stress and improve the high speed endurance. The Japan Pat. No. 60-234003A disclosed adding two additional auxiliary belts with textile cords; one between the two belt reinforcement package and the carcass and the other between the two belt reinforcement package and the tread rubber. Cord angles in these auxiliary plies were 54 to 90 degrees and opposed in orientation. The disclosed utility of this patent was to check shear deformation inside the surface of the belt layer as well as to prevent lateral force in straight ahead running (due to ply steer). The same objectives are accomplished with the invention wherein disclosed, but with a tyre construction greatly simplified and at a reduced tyre weight.

U.S. Patent 3,945,422 describes a three-belt tyre according to the preamble of claim 1, with a second belt ply being located between the first and third plies. The belt angle of the first and third plies have cords of identical angle with an equal number of cords per inch, and the second ply has twice the number of cords per inch as the first and third plies, and in angle equal in magnitude to that of the cords for the first and third plies, but opposite in sense, the cord angles having preferably a magnitude substantially equal to 24 degrees, the cords being preferably made of steel, the width differing from one ply to the other. The invention relates to a three-belt tyre having a structure different from the preceeding one, with improved endurance and reduced rolling resistance.

The use of polymeric monofilaments for the carcass or for the belt of tyres, said monofilaments having possibly an oblong cross-section, is disclosed for instance in the following patents or patent applications: US 3,166,113, US 3,963,678, US 4,634,625, US 3,692,080, US 4,850,412, EP 356,159. However, none of these documents describes the use of monofilaments in three-belt tyres.

US Patent No. 3,404,721 discloses the use of polyamide multifilament cords in a narrow ply folded in a U-shape around the edges of metallic belt plies.

The invention relates to the protection of a metallic belt ply in a different way, with a three-belt structure.

### SUMMARY OF THE INVENTION

The invention relates to a pneumatic radial tyre having at least one carcass ply, a tread, a pair of sidewalls, a pair of beads and a belt package located between the tread and the carcass ply, the belt package having three radially arranged plies, characterized in that first and third plies of the belt package include a plurality of substantially parallel extending polymeric monofilament reinforcing members disposed at a first angle relative to the equatorial plane in the range of about +15 to +20 degrees, a second ply of the belt package being located between said first and third plies and including a plurality of substantially parallel extending metallic reinforcing members disposed at a second angle in the range of about -15 to -25 degrees relative to the equatorial plane, said second ply being centered relative to the equatorial plane and having an axial width, said first and third plies being centered relative to the equatorial plane and having respective axial widths which are substantially equal to each other and being greater than the axial width of said second ply, axial edge portions of said first and third plies contacting each other.

The term "polymeric monofilament" refers to any monofilament made with an organic polymer, said monofilament being for instance a polyester or polyamide monofilament, and preferably a polyamide monofilament.

The term "axial" means "in a direction perpendicular to the equatorial plane".

Preferably, the tyre according to the invention has the following features. The axial width of ply two is comprised between about 95 % and 105 % of the axial width rolling tread and preferably equal to this width. The width of plies one and three are placed such that their edges extend beyond the edges of ply two by a distance comprised between about 5 and 16 mm on the cured tyre. The axial width of the first and third plies is therefore in the range of about 10 to 32 mm greater than the axial width of the second ply. The distances the reinforcing members in the first, second and third plies are spaced apart are substantially equal to one another.

The reinforcing belt package formed by the superposition of the three crown plies is separated from the carcass ply or plies by a thin layer of rubber, (shoulder wedge) approximately 0.5 to 0.8 mm thick in a radial direction on the cured tyre. This layer should extend laterally past the edges of the belt, but it can be interrupted under the central portion of the crown, for a width approximately equal to 50% of the belt width, by tapering its edge.

At 1.5% elongation, the stiffness per unit width of a tissue used for plies one and three should be at least 12.0 daN/cm and no greater than 50 daN/cm.

At 3.0% elongation, the stiffness per unit width of the tissue used for plies one and three should be at least 18.0 daN/cm and no greater than 70 daN/cm.

At 1.5% elongation, the stiffness per unit width of a tissue used for ply two should be at least 30 daN/cm with no upper limit.

The preferred configuration for plies one and three is a nylon monofilament with a decitex from 4000 to 6000, treated with a conventional RFL (resorcinol-formaldehyde-latex) adhesive, using treatment conditions to give a free shrinkage of the cable from 1.5 to 2.0% at 180 degrees centigrade.

The elastomeric skim material used for the reinforcing plies is of a type conventionally used for crown reinforcing plies of either metallic or textile materials with the modulus in a range from 10 to 45 megapascals (MPa) when measured at 10% elongation. The level of modulus used for the reinforcing plies will be dependent on the level of performance desired for the particular application of said tyre. The skim radial thickness for the reinforcing plies is dependent on the type of reinforcing materials used but should be sufficient as to give a layer of rubber from 0.1 mm to 0.25 mm above or below the surface of the reinforcing cords.

The preferred configuration for ply two is a steel cable covered with a conventional brass coating and posed at an angle from 15 to 25 degrees with respect to the equatorial plane of the tyre. The angle of the belt being selected to give the optimum balance of parameters for a given tyre design and dimension. The elastomeric skim material for the second reinforcing ply will be of a type conventionally used for steel plies in the crown of a tyre. The skim covering for ply two can be the same as for plies one and three.

The preferred radial distance of the rubber material between the belt package and the radially innermost surface of a tread groove is in the range of about 1.0 to about 2.0 millimeters.

### BRIEF DESCRIPTION OF THE DRAWINGS

One embodiment of the invention will now be described, by way of illustration and not of limitation, with reference to the accompanying drawings, in which:
Figure 1 is a prior art sectional view of the crown portion of a tyre having a conventional two ply belt reinforcement package;
Figure 2 is a developed sectional view of the belt package and carcass reinforcement of Figure 1;
Figure 3 is a sectional view showing the crown portion of a tyre having a three ply belt reinforcement package as per the preferred embodiment of this invention;
Figure 4 is a developed sectional view of the belt package and carcass reinforcement of Figure 3; and
Figure 5 is a perspective view of a section of a tyre crown portion partially broken away to reveal the internal structure and details of the preferred embodiment of the invention.

### DETAILED DESCRIPTION AND PREFERRED EMBODIMENTS

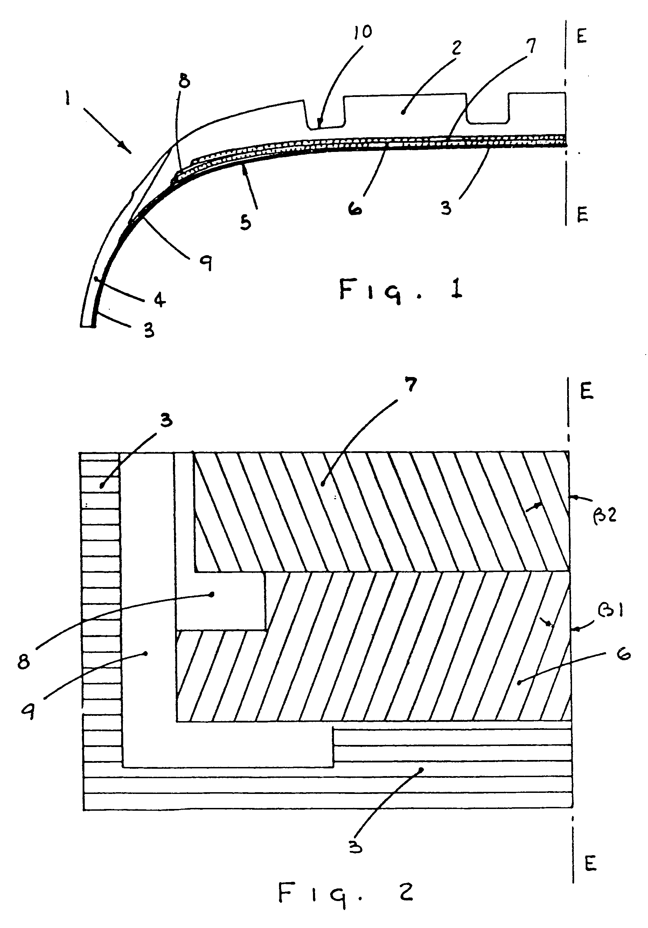

The conventional tyre 1 of Fig. 1 is symmetrical about the equatorial plane E-E and is typical state-of-the-art tyre design for the summit area of a passenger car tyre with nominal performance capabilities. The tyre components shown comprise a tread 2, and a carcass 3, one sidewall 4, an impervious liner 5, a belt reinforcing package having a first ply 6 and a second ply 7, an intra-ply wedge 8 and a shoulder wedge 9. The bead area is not shown. The cords or cables in the second ply 7 are disposed at an angle opposite to the first ply 6 cord or cable angles. This belt package bias results in a ply steer torque that preloads the steering & suspension system of the vehicle. The intra-ply wedge 8 is used to transition the inter-ply shear stresses between belts 6 and 7 at their edge. These stresses can limit the speed and fatigue endurance of the conventional tyre 1. Metallic cables are used in a majority of conventional tyre designs for belt reinforcement. Sufficient thickness between the bottom of the tread groove 10 and the metallic cable is necessary to provide corrosion resistance due to objects penetrating the tread 2 rubber. This conventional tyre 1 will be used to compare with the preferred embodiment tyre 11 disclosed below.

The developed sectional view of the belt reinforcement package, protective rubber and carcass for the conventional tyre 1 is shown in Fig. 2. The cords or cables are shown in a widely spaced relationship for clarity in disclosing the relationship of the cables in the belt plies and carcass. The tyre is symmetrical about the equatorial plane E-E.

The most radially inward carcass 3 is shown as a single body ply layer, but, multiple layers can also be used in these conventional tyres 1. The carcass cords are approximately 90 degrees to the equatorial plane E-E & are usually textile cords in the passenger car tyre. The standard two belt reinforcement package has a first ply 6 radially inward from a second ply 7. The belt cords can be either textile cords or metallic cables, with cables being the most common reinforcement to obtain adequate strength and durability at a reasonable tyre weight. The rubber skim material thickness covering metallic cords in the belt plies is nominally 0.30 to 0.60 millimeters. The angle β1 of the cords of the first ply 6 with respect to the equatorial plane E-E is opposed to the angle β2 of the cords of the second ply 7. The angles β1 and β2 are usually equal and opposite, and vary between approximately 18 and 30 degrees for the two-belt conventional tyre 1. The belt angle β2 of the most radially outward second ply 7 influences the magnitude of the ply steer torque on a free rolling conventional tyre 1.

The intra-ply wedge 8 is added between the belt plies 6 and 7 to improve tyre endurance by reducing the influence of high belt edge shearing forces and inter-ply shear stresses. The shoulder wedge 9 is added for improved stiffness at the shoulders and to help transition the forces between the carcass and the belt package.

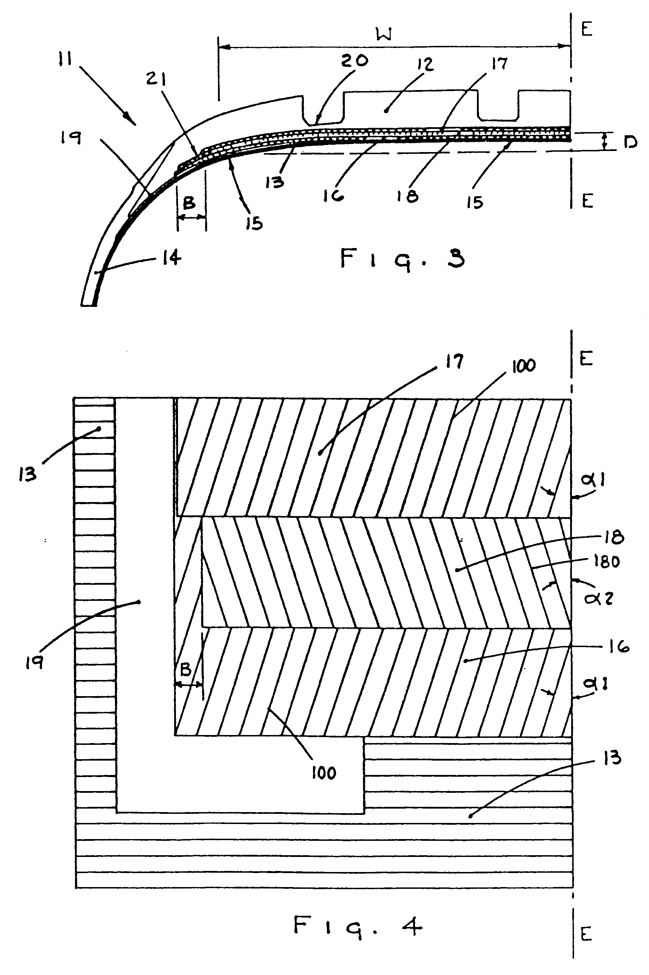

The preferred embodiment of this invention is the three-belt tyre 11 of Fig. 3, being symmetrical about the equatorial plane E-E. Tyre components shown comprise a tread 12, a carcass 13, one sidewall 14, an impervious liner 15, a belt reinforcement package having three crown reinforcing plies 16, 17 and 18 and one shoulder wedge 19. Improvements in the bead areas (not shown) are not a part of the scope of this invention. The most radially inward first ply 16 of the belt reinforcement package is essentially identical to the most radially outward third ply 17, including the angle of the belts as discussed below. The second ply 18 is interposed between the first and third plies 16 and 17. The axial width of said second ply 18 is in a range of approximately 95 to 105 percent of the axial width of said tread in rolling contact with the surface, for nominal design conditions specified by the Tyre and Rim Association, Inc. for each tyre size and use. Half this width is shown as dimension W in Fig. 3. The first and third plies 16 and 17 have a width extending beyond the second ply 18 and with a distance B in a range of approximately 5 to 16 millimeters on each edge. The third ply edge 21 is in contact with the first ply 16 and functions as a edge cover strip for the second ply 18. This permits the suppression of any intra-ply wedge used in the conventional tyre 1. A shoulder wedge 19 provides the same protection and function in the three-belt tyre 11 as in the conventional tyre 1. This shoulder wedge is discontinued in the central portion of the crown for a width of approximately 50 percent of the tread contact width 2 x W.

The distance between the bottom of the tread groove 20 and the belt package has been reduced in this three-belt tyre 11, and is in a range of about 1.0 to about 2.0 millimeters. This is made possible by the use of the corrosion resistant cord materials for the belt package as disclosed herein.

The developed sectional view of the belt reinforcement package, protection rubber and carcass for the preferred three-ply tyre 11 is shown in Fig. 4. The reinforcing members are shown in a widely spaced relationship for clarity in disclosing the relationship of the reinforcing members in the belt plies and carcass.

The tyre is symmetrical about the equatorial plane E-E. The most radially inward component is the carcass 13, which is shown as a single body ply, however, multiple plies are also within the scope of this invention. The cords of the carcass are approximately 90 degrees to the equatorial plane E-E (radial) and are multifilament cords from a family of material including rayon, polyamide and polyester. Monofilament cords can also be used in the carcass 13, but this is not the preferred materials for this embodiment.

The three-belt tyre's belt reinforcement package has first and third plies 16 & 17 approximately identical in construction and materials in the green state. The reinforcing members of the plies 16 and 17 of this preferred embodiment are polyamide (nylon) monofilaments 100 with a decitex in a range of approximately 4000 to 6000 grams per 10000 meters. The ply stiffness for the first and third plies 16 and 17 are quoted in the summary at 1.5 and 3.0 percent elongation. Each one of these monofilaments has an oblong cross-section, taken in a plane extending transversely to the direction in which it extends. This oblong shaped monofilament is superior to the multifilament cord in its resistance to penetration by foreign objects. The third ply 17 can then protect the second ply 18, which can have metallic cables subject to corrosion. The nylon monofilaments do not require a thick skim rubber, so first and third plies 16 & 17 have a rubber skim thickness covering the monofilaments in a range of approximately 0.10 to 0.25 millimeters and a modulus as quoted in the summary. The first belt angle α1 with respect to the equatorial plane E-E is the same for belt plies 16 and 17 and is in a range of approximately +15 to +20 degrees for the preferred embodiment illustrated in Figs. 3 and 4.

The second ply 18 of the belt package of Fig. 4 has as reinforcement metallic cables 180 provided the ply stiffness value quoted in the summary at 1.5 percent elongation is obtained. The second belt angle α2 is opposed to the first belt angle α1 and is in a range of values of approximately -15 to -25 degrees with respect to the equatorial plane E-E. The second belt angle α2 of the second ply 18 can be varied to give optimum balance of parameters for a given tyre design and dimension. The crown radius as well as the growth of the tyre during inflation and centrifugation are strongly dependent on the second angle α2. A crown radius in the range of approximately 450 to 3000 millimeters is used for this preferred embodiment.

At an optimum second ply angle α2, experimental investigations have shown the three-belt tyre 11 footprint area to have near zero ply steer, a more uniform pressure distribution and uniform longitudinal and transverse tractive stresses. The footprint is controlled by limiting the radial droop D of the edge of said second ply 18 with respect to its central area to be in a range of approximately 1 to 4 percent of its width. The tyre shows improved wear resistance, wet and dry traction and vehicle handling. The preferred reinforcement of said second ply 18 is a metallic cable 180 with a brass coating comprising approximately standard construction and including a skim rubber of the same material used for the steel belts of a conventional tyre, but a thickness as specified for the first and third plies 16 & 17. The shoulder wedge 19 separates the belt package from the carcass 13 and extends laterally at the shoulder area, but is discontinued in the central portion of the crown. The thickness of this conventional rubber shoulder wedge is in a range of approximately 0.5 to 0.8 millimeters and tapers to form a wedge at its central most edge.

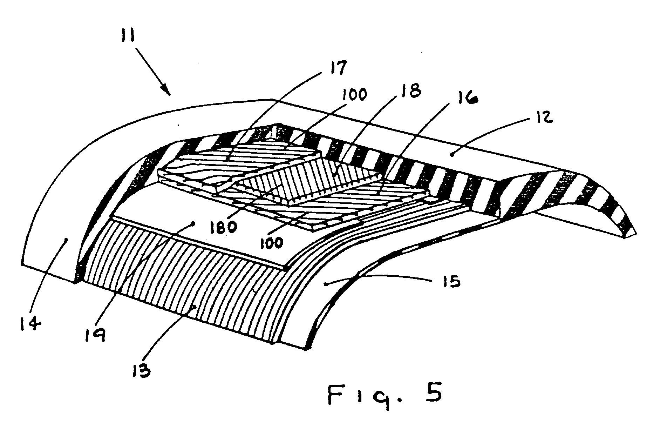

The perspective view of Fig. 5 illustrates the interrelationship of the various components that comprise the preferred three-belt tyre 11. The tread 12 sculpture is not shown, as various designs are possible within the scope of this invention. The carcass 13 is shown as one body ply, however, multiple body plies are within the scope of this invention. The first ply 16 and the third ply 17 of the belt reinforcing package are approximately the same including the monofilament angles of each. The third ply 17 covers the edge of the second ply 18 of this belt package providing belt edge protection for this second ply 18. The shoulder wedge 19 of rubber material on each lateral shoulder is placed between the carcass and the first ply 16 and extends around the shoulder area to the sidewall 14 area, but is truncated in the center section of the tyre. The liner 15 is a rubber material relatively impervious to air and of a conventional design. The cords are shown spaced apart for clarity in illustrating their relative orientation and location. All ply cords (reinforcing members) are spaced apart a substantially equal distance in the preferred embodiment.

The claimed invention has shown advantages over a conventional two steel belt design with respect to high speed performance and improved rolling resistance for standard drum and twin roll methods. This invention shows improved corrosion resistance and improved resistance to belt edge separations in severe operating conditions compared to the conventional two belt design. This invention allows for an easy adjustment for optimum performance, with a given mold design, by a small adjustment in the angle of the second ply. This invention also allows a significant reduction in the ply steer of the tyre by the adjustment in the angle of the second ply. This invention allows for a significant cost and weight reduction of the tyre by the reduction in the amount of steel in the tyre in addition to reduced rubber thickness required in the reinforcing plies and the undertread area of the tyre above the reinforcing belt package. This invention offers improved wear resistance, particularly for shoulder wear in hard cornering, with respect to the two steel belt tyre as a result of better distributions of the forces and optimization of the tyre footprint. This invention allows improved tyre comfort with respect to the two steel belt tyre through the reduction of steel and optimization of the tyre profile made possible by adjustments of the reinforcing belt package. This invention offers ease of production by the suppression of miscellaneous belt edge protection materials required for a two steel belt configuration, and the fact that belts one and three can be posed at the same post since they are identical.

### Experimental Evidence

The three-belt tyre of the preferred embodiment has been compared to a conventional state-of-the-art two steel belt tyre of the same T&RA rating presently offered for sale. Various experimental tests were performed and the results are summarized in the following discussion.

The three-belt tyre consistently had a high speed limit result in excess of 240 kilometers per hour. Average high speed limits were approximately 15 percent higher for the three-belt tyre. Rolling resistance on the meter roadwheel show a 2 to 5 percent decrease, and on the twin-rolls a 4 to 5 percent decrease was recorded by the three-belt tyre. The "three-belt tyre" ply steer torque that preloads the steering and suspension system was drastically reduced to a value 1/6 to 1/10 of the value recorded for the conventional tyre. Finally, an overall reduction in tyre weight by approximately 10 to 15 percent is obtained by using three-belt tyre of this invention.

It will be understood that similar ply arrangements and the use of other cord materials can be developed for the first and third plies of the three-belt reinforcement package disclosed in the specific examples given herein without departing from the invention. For example, polyester monofilaments can be used. Accordingly, the exemplary forms of the invention described above should be considered as illustrative and not as limiting the invention as defined in the following claims.

## Claims

1. A pneumatic radial tyre (11) having at least one carcass ply (13), a tread (12), a pair of sidewalls (14), a pair of beads and a belt package located between the tread and the carcass ply, the belt package having three radially arranged plies (16, 17, 18), characterized in that first and third plies (16, 17), of the belt package include a plurality of substantially parallel extending polymeric monofilament reinforcing members (100) disposed at a first angle (α1) relative to the equatorial plane in the range of about +15 to +20 degrees, a second ply (18) of the belt package being located between said first and third plies (16, 17) and including a plurality of substantially parallel extending metallic reinforcing members (180) disposed at a second angle (α2) in the range of about -15 to -25 degrees relative to the equatorial plane, said second ply (18) being centered relative to the equatorial plane and having an axial width, said first and third plies (16, 17) being centered relative to the equatorial plane and having respective axial widths which are substantially equal to each other and being greater than the axial width of said second ply (18), axial edge portions of said first and third plies (16, 17) contacting each other.

2. The tyre (11) according to claim 1 wherein said first and third plies (16, 17) each have a stiffness per unit width at 1.5 percent elongation of at least 12.0 daN/cm and no greater than 50 daN/cm and a stiffness per unit width at 3.0 percent elongation of at least 18.0 daN/cm and no greater than 70 daN/cm.

3. The tyre (11) according to claim 1 wherein said second ply (18) has a stiffness per unit width at 1.5 percent elongation of at least 30 daN/cm.

4. The tyre (11) according to claim 1 further including rubber (19) located between the carcass ply (13) and the belt package, said rubber (19) having a thickness taken in a radial direction in the range of about 0.5 to 0.8 millimeter.

5. The tyre (11) according to claim 1 further including rubber located radially outwardly of the belt package and defining the tread (12), said rubber having a least one groove (20) therein, the radial thickness of said rubber between the belt package and the radially innermost surface of the groove being in the range of about 1.0 to 2.0 millimeters.

6. The tyre (11) according to claim 1 futher including a rubber skim covering the polymetric monofilament reinforcing members (100) in said first and third plies (16, 17), said rubber skim having a radial thickness in the range of about 0.10 to 0.25 millimeter.

7. The tyre (11) according to claim 1 wherein each of said polymeric monofilament reinforcing members (100) is a polyamide monofilament.

8. The tyre (11) according to claim 7 further including said polyamide monofilament (100) having an oblong cross-section taken in a plane extending transverserly to the direction in which said reinforcing member (100) extends.

9. The tyre (11) according to claim 1 wherein the axial width of said second ply (18) is in the range of about 95% to 105% of the axial width of the tread (12).

10. The tyre (11) according to claim 1, wherein the axial width of said first and third plies (16, 17) are each in the range of about 10 to 32 millimeters greater than the axial width of said second ply (18).

11. The tyre (11) according to claim 1 wherein the distance that the reinforcing members (100) in said first (16), second (18) and third (17) plies are spaced apart are substantially equal to one another.

## Patentansprüche

1. Radial-Luftreifen (11) mit wenigstens einer Karkasseneinlage (13), einem Laufstreifen (12), einem Paar Seitenwände (14), einem Paar Wülste und einer zwischen dem Laufstreifen und der Karkasseneinlage angeordneten Gürtelpackung, wobei die Gürtelpackung drei radial angeordnete Einlagen (16, 17, 18) aufweist,
dadurch **gekennzeichnet,** daß
die erste und dritte Einlage (16, 17) der Gürtelpackung eine Mehrzahl von im wesentlichen parallel verlaufenden Polymer-Monofilament-Verstärkungsteilen (100) enthalten, die unter einem ersten Winkel (α1) relativ zur Mittelebene im Bereich von ca. +15 bis +20° angeordnet sind, eine zweite Einlage (18) der Gürtelpackung zwischen der ersten und der dritten Einlage (16, 17) angeordnet ist und eine Mehrzahl von im wesentlichen parallel verlaufenden metallischen Verstärkungsteilen (180) enthält, die unter einem zweiten Winkel (α2) im Bereich von ca. -15 bis -25° relativ zur Mittelebene angeordnet sind, wobei die zweite Einlage (18) relativ zur Mittelebene zentriert ist und eine bestimmte axiale Breite hat, die erste und dritte Einlage (16, 17) relativ zur Mittelebene zentriert sind und jeweils axiale Breiten haben, die im wesentlichen einander gleich und größer als die axiale Breite der zweiten Einlage (18) sind, und axiale Kantenbereiche der ersten und der dritten Einlage (16, 17) einander berühren.

2. Reifen (11) nach Anspruch 1, bei dem die erste und die dritte Einlage (16, 17) jeweils eine Steifigkeit pro Breiteneinheit bei 1,5 % Dehnung von wenigstens 12,0 daN/cm und nicht mehr als 50 daN/cm und eine Steifigkeit pro Breiteneinheit bei 3,0 % Dehnung von wenigstens 18,0 daN/cm und nicht mehr als 70 daN/cm haben.

3. Reifen (11) nach Anspruch 1, bei dem die zweite Einlage (18) eine Steifigkeit pro Breiteneinheit bei 1,5 % Dehnung von wenigstens 30 daN/cm hat.

4. Reifen (11) nach Anspruch 1, mit zwischen der Karkasseneinlage (13) und der Gürtelpackung angeordnetem Gummi (19), welches Gummi (19) in radialer Richtung gemessen eine Dicke im Bereich von ca. 0,5 bis 0,8 mm hat.

5. Reifen (11) nach Anspruch 1, mit radial außerhalb der Gürtelpackung angeordnetem, den Laufstreifen (12) definierendem Gummi, in dem wenigstens eine Rille (20) gebildet ist, wobei die radiale Dicke des Gummis zwischen der Gürtelpackung und der radial innersten Oberfläche der Rille im Bereich von ca. 1,0 bis 2,0 mm liegt.

6. Reifen (11) nach Anspruch 1, mit einer die Polymer-Monofilament-Verstärkungsteile (100) in der ersten und dritten Einlage (16, 17) bedeckenden Gummibeschichtung, die eine radiale Dicke im Bereich von ca. 0,10 bis 0,25 mm hat.

7. Reifen (11) nach Anspruch 1, bei dem jedes der Polymer-Monofilament-Verstärkungsteile (100) ein Polyamid-Monofilament ist.

8. Reifen (11) nach Anspruch 7, bei dem das Polyamid-Monofilament (100) einen ovalen Querschnitt in einer Ebene quer zur Verlaufsrichtung des Verstärkungsteils (100) hat.

9. Reifen (11) nach Anspruch 1, bei dem die axiale Breite der zweiten Einlage (18) im Bereich von ca. 95 % bis 105 % der axialen Breite des Laufstreifens (12) liegt.

10. Reifen (11) nach Anspruch 1, bei dem die axialen Breiten der ersten und dritten Einlage (16, 17) jeweils um ca. 10 bis 32 mm größer als die axiale Breite der zweiten Einlage (18) sind.

11. Reifen (11) nach Anspruch 1, bei dem die Abstände, in denen die Verstärkungsteile (100) in der ersten (16), zweiten (18) und dritten (17) Einlage angeordnet sind, im wesentlichen gleich sind.

## Revendications

1. Enveloppe de pneumatique radiale (11) ayant au moins une nappe carcasse (13), une bande de roulement (12), deux flancs (14), deux bourrelets, et une armature de renfort sommet située entre la bande de roulement et la nappe carcasse, l'armature de renfort sommet ayant trois nappes disposées radialement (16, 17, 18), caractérisée en ce que la première et la troisième nappes (16, 17) de l'armature de renfort sommet comportent plusieurs membres de renfort (100) en monofilaments polymères, qui s'étendent substantiellement de façon parallèle, disposés selon un premier angle (α1), par rapport au plan équatorial, dans le domaine d'environ +15 à +20 degrés, une deuxième nappe (18) de l'armature de renfort sommet étant disposée entre lesdites première et troisième nappes (16, 17) et comportant plusieurs membres de renfort (180) métalliques, qui s'étendent substantiellement de façon parallèle, disposés selon un deuxième angle (α2) dans le domaine d'environ -15 à -25 degrés par rapport au plan équatorial, ladite deuxième nappe (18) étant centrée par rapport au plan équatorial et ayant une largeur axiale, lesdites première et troisième nappes (16, 17) étant centrées par rapport au plan équatorial et ayant des largeurs axiales respectives qui sont substantiellement égales entr'elles et qui sont supérieures à la largeur axiale de ladite deuxième nappe (18), des portions axiales des bords desdites première et troisième nappes (16, 17) étant au contact l'une de l'autre.

2. Enveloppe de pneumatique (11) selon la revendication 1, où lesdites première et troisième nappes (16, 17) ont chacune une rigidité par unité de largeur, à un allongement de 1,5 %, qui est d'au moins 12,0 daN/cm et qui n'est pas supérieure à 50 daN/cm, et une rigidité par unité de largeur, à un allongement de 3,0 %, qui est d'au moins 18,0 daN/cm et qui n'est pas supérieure à 70 daN/cm.

3. Enveloppe de pneumatique (11) selon la revendication 1, où ladite deuxième nappe (18) a une rigidité par unité de largeur, à un allongement de 1,5 %, qui est d'au moins 30 daN/cm.

4. Enveloppe de pneumatique (11) selon la revendication 1, qui comporte en outre un caoutchouc (19) disposé entre la nappe carcasse (13) et l'armature de renfort sommet, ledit caoutchouc (19) ayant une épaisseur, prise dans une direction radiale, dans le domaine d'environ 0,5 à 0,8 millimètre.

5. Enveloppe de pneumatique (11) selon la revendication 1, qui comporte en outre un caoutchouc disposé radialement à l'extérieur de l'armature de renfort sommet et qui définit la bande de roulement (12), ledit caoutchouc ayant là au moins une rainure (20), l'épaisseur radiale dudit caoutchouc, entre l'armature de renfort sommet et la surface radialement la plus interne de la rainure, étant dans le domaine d'environ 1,0 à 2,0 millimètres.

6. Enveloppe de pneumatique (11) selon la revendication 1, qui comporte en outre une couche de caoutchouc recouvrant les membres de renfort (100) en monofilaments polymères dans lesdites première et troisième nappes (16, 17), ladite couche de caoutchouc ayant une épaisseur radiale dans le domaine d'environ 0,10 à 0,25 millimètre.

7. Enveloppe de pneumatique (11) selon la revendication 1 où chacun desdits membres de renfort (100) en monofilament polymère est un monofilament de polyamide.

8. Enveloppe de pneumatique (11) selon la revendication 7, dans laquelle en outre ledit monofilament de polyamide (100) a une section transversale oblongue, prise dans un plan qui s'étend transversalement par rapport à la direction dans laquelle ledit membre de renfort (100) s'étend.

9. Enveloppe de pneumatique (11) selon la revendication 1, où la largeur axiale de ladite deuxième nappe (18) est dans le domaine d'environ 95 % à 105 % de la largeur axiale de la bande de roulement (12).

10. Enveloppe de pneumatique (11) selon la revendication 1, où les largeurs axiales desdites première et troisième nappes (16, 17) excèdent chacune d'environ 10 à 32 millimètres la largeur axiale de ladite deuxième nappe (18).

11. Enveloppe de pneumatique (11) selon la revendication 1, où les distance qui séparent les membres de renfort (100) dans lesdites première (16), deuxième (18) et troisième (17) nappes sont substantiellement égales entr'elles.
